(19) Europäisches Patentamt
European Patent Office
Office européen des brevets

(11) **EP 4 037 033 A1**

(12) **EUROPEAN PATENT APPLICATION**
published in accordance with Art. 153(4) EPC

(43) Date of publication:
**03.08.2022 Bulletin 2022/31**

(21) Application number: **20868161.9**

(22) Date of filing: **23.09.2020**

(51) International Patent Classification (IPC):
$H01M\ 4/587$ (2010.01)  $H01G\ 11/24$ (2013.01)
$H01G\ 11/36$ (2013.01)  $C01B\ 32/21$ (2017.01)
$C01B\ 32/348$ (2017.01)

(52) Cooperative Patent Classification (CPC):
**C01B 32/21; C01B 32/348; H01G 11/24;**
**H01G 11/36; H01M 4/587;** Y02E 60/10; Y02E 60/13

(86) International application number:
**PCT/JP2020/035695**

(87) International publication number:
**WO 2021/060243 (01.04.2021 Gazette 2021/13)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **24.09.2019  JP 2019173344**
**24.09.2019  JP 2019173345**

(71) Applicant: **SEKISUI CHEMICAL CO., LTD.**
**Osaka-shi**
**Osaka**
**530-8565 (JP)**

(72) Inventors:
- **SASAGAWA, Naoki**
  **Mishima-gun, Osaka 618-0021 (JP)**
- **SHINOHARA, Takamichi**
  **Mishima-gun, Osaka 618-0021 (JP)**

(74) Representative: **Ter Meer Steinmeister & Partner**
**Patentanwälte mbB**
**Nymphenburger Straße 4**
**80335 München (DE)**

(54) **CARBON MATERIAL AND ELECTRODE MATERIAL FOR POWER STORAGE DEVICE**

(57) Provided is a carbon material that can improve characteristics such as electrostatic capacitance and rate characteristics of the power storage device. A carbon material used for an electrode material of a power storage device, the carbon material having a graphene layered structure, and in a small-angle X-ray scattering spectrum of the carbon material, a slope of a straight line connecting a point indicating a scattering intensity when a natural logarithm LN (q) of a scattering vector is -1.5 and a point indicating a natural logarithm of a scattering intensity when the natural logarithm LN (q) of the scattering vector is 1.4 being -1.5 or less.

[FIG. 2.]

EP 4 037 033 A1

**Description**

**TECHNICAL FIELD**

The present invention relates to a carbon material having a graphene layered structure and an electrode material for a power storage device using the carbon material.

**BACKGROUND ART**

In recent years, research and development of power storage devices such as capacitors and lithium ion secondary batteries have been actively conducted for mobile devices, hybrid vehicles, electric vehicles, household power storage applications, and the like. As an electrode material of a power storage device, a carbon material such as graphite, activated carbon, carbon nanofiber, or carbon nanotube is widely used from an environmental aspect.

For example, Patent Document 1 below discloses a non-aqueous electrolytic solution energy storage device using porous carbon having pores of a three-dimensional network structure as an electrode material. In Patent Document 1, the porous carbon is used as a positive electrode active material that allows intercalation or deintercalation of anions. Therefore, Patent Document 1 describes that the pore volume of the porous carbon is preferably 0.2 $cm^3$/g or more.

**Related Art Document**

**Patent Document**

Patent Document 1: WO 2016/143423 A

**SUMMARY OF THE INVENTION**

**PROBLEMS TO BE SOLVED BY THE INVENTION**

In recent years, in the field of power storage devices such as capacitors and lithium ion secondary batteries, further improvement in capacitor characteristics, battery characteristics, and the like has been required. However, even in the power storage device using the carbon material of Patent Document 1, characteristics such as electrostatic capacitance and rate characteristics cannot be sufficiently improved.

As a result of intensive studies on this cause, the present inventors have found that in a conventional carbon material, an electrolytic solution hardly penetrates into pores, and as a result, there arises a problem that characteristics such as electrostatic capacitance and rate characteristics cannot be sufficiently enhanced.

An object of the present invention is to provide a carbon material capable of improving characteristics such as electrostatic capacitance and rate characteristics of a power storage device, and an electrode material for a power storage device using the carbon material.

**MEANS FOR SOLVING THE PROBLEMS**

A carbon material according to a first invention of the present application is a carbon material used for an electrode material of a power storage device, the carbon material having a graphene layered structure, and in a small-angle X-ray scattering spectrum of the carbon material, a slope of a straight line connecting a point indicating a natural logarithm of a scattering intensity when a natural logarithm LN (q) of a scattering vector is -1.5 and a point indicating a natural logarithm of a scattering intensity when the natural logarithm LN (q) of the scattering vector is 1.4 being -1.5 or less.

In a specific aspect of the carbon material according to the first invention of the present application, a scattering peak is not substantially observed in a range of a natural logarithm LN (q) of the scattering vector of -1.5 to 1.4 in the small-angle X-ray scattering spectrum of the carbon material.

In another specific aspect of the carbon material according to the first invention of the present application, in the small-angle X-ray scattering spectrum of the carbon material, the slope of the straight line connecting the point indicating the natural logarithm of the scattering intensity when the natural logarithm LN (q) of the scattering vector is -1.5 and the point indicating the natural logarithm of the scattering intensity when the natural logarithm LN (q) of the scattering vector is 1.4 is -1.8 or less.

In still another specific aspect of the carbon material according to the first invention of the present application, in the small-angle X-ray scattering spectrum of the carbon material, the slope of the straight line connecting the point indicating the natural logarithm of the scattering intensity when the natural logarithm LN (q) of the scattering vector is -1.5 and the point indicating the natural logarithm of the scattering intensity when the natural logarithm LN (q) of the scattering vector is 1.4 is -2.0 or more.

In still another specific aspect of the carbon material according to the first invention of the present application, a pore size of the carbon material measured in accordance with non-localized density functional theory (NLDFT) is 0.6 nm or more and 2.0 nm or less.

In still another specific aspect of the carbon material according to the first invention of the present application, a pore volume of the carbon material measured in accordance with a micropore method is 0.3 cm$^3$/g or more and 1.0 cm$^3$/g or less.

In still another specific aspect of the carbon material according to the first invention of the present application, a BET specific surface area of the carbon material is 900 m$^2$/g or more and 3,500 m$^2$/g or less.

A carbon material according to a second invention of the present application is a carbon material used for an electrode material of a power storage device, the carbon material having a graphene layered structure, a BET specific surface area of the carbon material being 450 m$^2$/g or more, and a pore volume of the carbon material in a range of a pore size of 0.003 $\mu$m to 2 $\mu$m measured by mercury porosimetry being 1.5 mL/g or more.

In a specific aspect of the carbon material according to the second invention of the present application, a median size of pores of the carbon material measured by mercury porosimetry is 0.7 $\mu$m or less.

In still another specific aspect of the carbon material according to the second invention of the present application, a porosity of the carbon material measured by mercury porosimetry is 60% or more.

In still another specific aspect of the carbon material according to the second invention of the present application, a pore size of the carbon material measured in accordance with NLDFT is 0.6 nm or more and 2.0 nm or less.

Hereinafter, the first invention and the second invention of the present application may be collectively referred to as the present invention.

In still another specific aspect of the carbon material according to the present invention, an O/C ratio of the carbon material measured by X-ray photoelectron spectroscopy is 0.05 or less.

In still another specific aspect of the carbon material according to the present invention, the carbon material is graphite or exfoliated graphite.

In still another specific aspect of the carbon material according to the present invention, the carbon material is partially exfoliated graphite having a structure in which graphite is partially exfoliated.

An electrode material for a power storage device according to the present invention contains the carbon material configured according to the present invention.

## EFFECT OF THE INVENTION

According to the present invention, it is possible to provide a carbon material capable of improving characteristics such as electrostatic capacitance and rate characteristics of a power storage device, and an electrode material for a power storage device using the carbon material.

## BRIEF DESCRIPTION OF DRAWINGS

[Fig. 1] Fig. 1 is a schematic view showing an example of partially exfoliated graphite.
[Fig. 2] Fig. 2 is a view showing small-angle X-ray scattering spectra of carbon materials obtained in Examples 1 to 5 and Comparative Examples 1 to 2.
[Fig. 3] Fig. 3 is a scanning electron microscope (SEM) photograph of the cross section of powder of a carbon material obtained in Example 6.
[Fig. 4] Fig. 4 is a scanning electron microscope (SEM) photograph of the cross section of powder of a carbon material obtained in Comparative Example 3.

## MODE(S) FOR CARRYING OUT THE INVENTION

Hereinafter, details of the present invention will be described.

[Carbon material]

(First invention)

A carbon material according to the first invention of the present application is a carbon material used for an electrode material of a power storage device. The carbon material has a graphene layered structure. In the small-angle X-ray scattering spectrum of the carbon material, the slope of a straight line connecting a point indicating the natural logarithm of the scattering intensity when the natural logarithm LN (q) of the scattering vector is -1.5 and a point indicating the natural logarithm of the scattering intensity when the natural logarithm LN (q) of the scattering vector is 1.4 is -1.5 or less.

The small-angle X-ray scattering measurement (SAXS) is a measurement method in which scattered X-rays appearing in a low-angle region of $2\theta < 10°$ among X-rays scattered by irradiating a carbon material with X-rays are measured to identify a structure at a level of several nanometers of the carbon material. In the first invention, in particular, since observation is performed in a range of a natural logarithm LN (q) of the scattering vector of -1.5 to 1.4, information on the carbon material with a pore structure of 1.5 nm to 30 nm can be obtained. Note that the scattering vector q [nm$^{-1}$] is represented by $4\pi\sin\theta/\lambda$. $\lambda$ is the wavelength of an X-ray incident on the carbon material. $2\theta$ is the scattering angle.

The small-angle X-ray scattering measurement (SAXS) can be performed using an X-ray diffractometer, for example, according to the following procedure. First, a powder sample is sandwiched between a 1 mm spacer and two polyethyl ether ketone (PEEK) films to prepare a test specimen. The test specimen is attached to a measurement jig, and X-rays are made incident on the test specimen. The irradiation direction of the X-ray is adjusted so as to be orthogonal to the plane direction of the test piece constituting the test specimen. As the X-ray diffractometer, for example, trade name "X-ray diffractometer Smart Lab" manufactured by Rigaku Corporation can be used.

In addition, a CuK$\alpha$ ray (wavelength: 0.154 nm) can be used as a light source at an output of 45 kV and 200 mA, and a small-angle scattering arrangement can be used. The measurement can be performed at a step angle of 0.02° in a scan range of 0.06 to 6° with a scan rate of 0.2°/min.

In the carbon material of the first invention, in the small-angle X-ray scattering spectrum measured as described above, each of the scattering intensity obtained by subtracting the scattering intensity of the blank from the measured scattering intensity and the scattering vector is graphed in natural logarithm, and the slope of a straight line connecting a point indicating the natural logarithm of the scattering intensity when the natural logarithm LN (q) of the scattering intensity is -1.5 and a point indicating the natural logarithm of the scattering intensity when the natural logarithm LN (q) of the scattering vector is 1.4 is - 1.5 or less. Therefore, characteristics such as electrostatic capacitance and rate characteristics of the power storage device can be improved. This point can be described as follows.

In a conventional carbon material such as activated carbon, a scattering peak is observed in a range of a natural logarithm LN (q) of the scattering vector of -1.5 to 1.4 in the small-angle X-ray scattering spectrum. Therefore, the slope of the straight line connecting a point indicating the natural logarithm of the scattering intensity when the natural logarithm LN (q) of the scattering vector is -1.5 and a point indicating the natural logarithm of the scattering intensity when the natural logarithm LN (q) of the scattering vector is 1.4 is more than -1.5. This is considered to be because in a carbon material such as activated carbon, pores are formed so as to linearly extend in the depth direction, and there are many portions having a regular structure.

On the other hand, in the carbon material of the first invention, the slope of the straight line connecting a point indicating the natural logarithm of the scattering intensity when the natural logarithm LN (q) of the scattering vector is -1.5 and a point indicating the natural logarithm of the scattering intensity when the natural logarithm LN (q) of the scattering vector is 1.4 is -1.5 or less. Therefore, it is considered that the pores are formed to bend or meander without linearly extending in the depth direction. In the carbon material of the first invention, the slope of the straight line connecting a point indicating the natural logarithm of the scattering intensity when the natural logarithm LN (q) of the scattering vector is -1.5 and a point indicating the natural logarithm of the scattering intensity when the natural logarithm LN (q) of the scattering vector is 1.4 is preferably -1.8 or less. In this case, it is considered that the pores are formed in a more bent or meandering manner. Therefore, when the carbon material of the first invention is used for, for example, an electrode material of a power storage device such as a capacitor, an electrolytic solution and ions easily penetrate into pores, and diffusibility of the electrolytic solution and ions in the electrode material can be enhanced. Therefore, in the carbon material of the first invention, characteristics such as electrostatic capacitance and rate characteristics of the power storage device can be improved.

In the carbon material of the first invention, the slope of the straight line connecting a point indicating the natural logarithm of the scattering intensity when the natural logarithm LN (q) of the scattering vector is -1.5 and a point indicating the natural logarithm of the scattering intensity when the natural logarithm LN (q) of the scattering vector is 1.4 is preferably -2.0 or more. In this case, it is considered that the pores formed in a more bent or meandering manner are efficiently constructed. In this case, when the carbon material of the first invention is used for, for example, an electrode material of a power storage device such as a capacitor, the amount of electrolytic solution or ions in the pores can be further increased. Therefore, characteristics such as electrostatic capacitance and rate characteristics of the power storage device can be further improved.

In the first invention, it is preferable that a scattering peak is not substantially observed in a range of a natural logarithm LN (q) of the scattering vector of -1.5 to 1.4 in the small-angle X-ray scattering spectrum of the carbon material. In this case, the pores are formed in a more bent or meandering manner, whereby the diffusibility of the electrolytic solution and ions in the electrode material can be further enhanced. Note that the phrase "the scattering peak is not substantially observed" includes a case where even when pores extend irregularly, or even when there is a portion where pores extend regularly, the peak of pores extending in another direction cancels out the peak corresponding to such portions, and as a result, no peak is observed in the scattering spectrum.

From the viewpoint of further improving characteristics such as electrostatic capacitance and rate characteristics of the power storage device, the slope of the straight line in the small-angle X-ray scattering spectrum of the carbon material is preferably -1.8 or less, and more preferably -2 or less. The lower limit of the slope of the straight line in the small-angle X-ray scattering spectrum of the carbon material is not particularly limited, but may be, for example, -3.

In the carbon material of the first invention, the gas adsorption pore size measured in accordance with NLDFT (Non-Localized Density Functional Theory) is preferably 0.4 nm or more, and more preferably 0.6 nm or more, and is preferably 3.0 nm or less, more preferably 2.5 nm or less, still more preferably 2.0 nm or less, and particularly preferably 1.5 nm or less. When the gas adsorption pore size is within the above range, the diffusibility of the electrolytic solution and ions in the electrode material can be further enhanced, and characteristics such as electrostatic capacitance and rate characteristics of the power storage device can be further improved.

In the carbon material of the first invention, the pore volume measured in accordance with the MP method (micropore distribution) is 0.3 $cm^3/g$ or more, and more preferably 0.35 $cm^3/g$ or more, and is preferably 1.0 $cm^3/g$ or less, more preferably 0.9 $cm^3/g$ or less, still more preferably 0.7 $cm^3/g$ or less, and particularly preferably 0.65 $m^3/g$ or less. When the pore volume is within the above range, the diffusibility of the electrolytic solution and ions in the electrode material can be further enhanced, and characteristics such as electrostatic capacitance and rate characteristics of the power storage device can be further improved. The volume of pores refers to the sum of the volumes of all pores in the carbon material.

In the carbon material of the first invention, the BET specific surface area is preferably 500 $m^2/g$ or more, more preferably 900 $m^2/g$ or more, and still more preferably 1,100 $m^2/g$ or more, and is preferably 4,000 $m^2/g$ or less, and more preferably 3,500 $m^2/g$ or less. When the BET specific surface area is within the above range, the diffusibility of the electrolytic solution and ions in the electrode material can be further enhanced, and characteristics such as electrostatic capacitance and rate characteristics of the power storage device can be further improved.

In the present specification, the BET specific surface area refers to a specific surface area calculated by analyzing an adsorption isotherm obtained by measuring the adsorption amount of nitrogen ($N_2$) based on the BET method. The BET specific surface area can be calculated, for example, by measuring an adsorption isotherm using a high-precision gas adsorption amount measuring apparatus (product number "BELSORP-MAX", manufactured by MicrotracBEL Corp., nitrogen gas, multipoint measurement at 50 to 100 points at $1.0 \times 10^{-6} <$ relative pressure $P/P_0 < 0.99$, vacuum treatment at 300°C for 5 hours as pretreatment conditions). The BET specific surface area can be calculated by analyzing the adsorption isotherm with analysis software (software name "BELMaster" manufactured by MicrotracBEL Corp.,) based on the BET method.

(Second invention)

A carbon material according to the second invention of the present application is a carbon material used for an electrode material of a power storage device. The carbon material has a graphene layered structure. The BET specific surface area of the carbon material is 450 $m^2/g$ or more. The pore volume of the carbon material is 1.5 mL/g or more.

The BET specific surface area refers to a specific surface area calculated by analyzing an adsorption isotherm obtained by measuring the adsorption amount of nitrogen ($N_2$) based on the BET method.

The BET specific surface area can be calculated, for example, by measuring an adsorption isotherm using a high-precision gas adsorption amount measuring apparatus (product number "BELSORP-MAX", manufactured by MicrotracBEL Corp., nitrogen gas (77K), multipoint measurement at 50 to 100 points at $1.0 \times 10^{-6} <$ relative pressure $P/P_0 < 0.99$, vacuum treatment at 300°C for 5 hours as pretreatment conditions). The BET specific surface area can be calculated by analyzing the adsorption isotherm with analysis software (software name "BELMaster" manufactured by MicrotracBEL Corp.,) based on the BET method.

The pore volume can be calculated by measuring the integrated intrusion amount of mercury with respect to the pressure applied by mercury porosimetry. Examples of the pore volume measuring apparatus include a pore distribution measuring apparatus "AutoPore V 9620" manufactured by Micromeritics Instrument Corporation. The pore volume is the sum of volumes of all pores having a pore size of 0.003 $\mu$m to 2 $\mu$m in the carbon material.

Since the BET specific surface area and the pore volume of the carbon material of the second invention are the above lower limit or more, characteristics such as electrostatic capacitance and rate characteristics of the power storage device can be improved. This point can be described as follows.

In a conventional carbon material such as activated carbon, when the carbon material is used for an electrode of a power storage device, an electrolytic solution hardly penetrates into pores, and as a result, there is a problem that characteristics such as electrostatic capacitance and rate characteristics cannot be sufficiently enhanced.

On the other hand, in the carbon material of the second invention, the pore volume in a range of a pore size

of 0.003 μm to 2 μm is the above lower limit or more. Therefore, when the carbon material is used for an electrode of a power storage device, an electrolytic solution or ions easily permeate into the pores, and the diffusibility of the electrolytic solution or ions in the electrode material can be improved. In addition, in the carbon material of the second invention, the BET specific surface area is the above lower limit or more. Therefore, the electrostatic capacitance can be increased even when the pore volume is increased as described above. In the carbon material of the second invention, it is therefore possible to achieve both improvement in diffusibility of an electrolytic solution or an ionic liquid and improvement in electrostatic capacitance at a high level, which have been conventionally difficult to achieve. Accordingly, in the carbon material of the second invention, characteristics such as electrostatic capacitance and rate characteristics of the power storage device can be improved.

In the second invention, the BET specific surface area of the carbon material is preferably 500 $m^2$/g or more, more preferably 900 $m^2$/g or more, and still more preferably 1,100 $m^2$/g or more, and is preferably 4,000 $m^2$/g or less, and more preferably 3,500 $m^2$/g or less. When the BET specific surface area of the carbon material is within the above range, characteristics such as electrostatic capacitance and rate characteristics of the power storage device can be further improved.

In the second invention, the pore volume of the carbon material in a range of a pore size of 0.003 μm to 2 μm measured by mercury porosimetry is preferably 2.5 mL/g or more, and more preferably 3 mL/g or more, and is preferably 6 mL/g or less, and more preferably 5.5 mL/g or less. When the pore volume of the carbon material is within the above range, characteristics such as electrostatic capacitance and rate characteristics of the power storage device can be further improved.

In the second invention, the median size of pores of the carbon material measured by mercury porosimetry is preferably 0.2 μm or more, and more preferably 0.3 μm or more, and is preferably 0.7 μm or less, and more preferably 0.6 μm or less. When the median size of pores in the carbon material is within the above range, characteristics such as electrostatic capacitance and rate characteristics of the power storage device can be further improved.

In the second invention, the porosity of the carbon material measured by mercury porosimetry is preferably 60% or more, and more preferably 75% or more. When the porosity of the carbon material is the lower limit or more, the diffusibility of the electrolytic solution and ions in the electrode material can be further enhanced, and characteristics such as electrostatic capacitance and rate characteristics of the power storage device can be further improved. The upper limit of the porosity of the carbon material can be, for example, 95% or less.

The pore structure such as the median size of pores and porosity in the carbon material can be calculated by measuring the integrated intrusion amount of mercury with respect to the pressure applied by mercury porosimetry, similarly to the pore volume. Examples of the measuring apparatus for the pore structure include a pore distribution measuring apparatus "AutoPore V 9620" manufactured by Micromeritics Instrument Corporation. The measurement is performed at an initial pressure of 7 kPa, and analysis is performed in a range of a pore size of the carbon material of 0.003 μm to 2 μm. The parameters of mercury were set to a contact angle of 130° (degrees) and a surface tension of 485 dynes/cm. A sample (0.01 to 0.09 g) was placed in a 5 cc standard cell for powder, and the measurement was performed.

In the carbon material of the second invention, the gas adsorption pore size measured in accordance with NLDFT (Non-Localized Density Functional Theory) is preferably 0.4 nm or more, and more preferably 0.6 nm or more, and is preferably 3.0 nm or less, more preferably 2.5 nm or less, still more preferably 2.0 nm or less, and particularly preferably 1.5 nm or less. When the gas adsorption pore size is within the above range, the bulk density of the electrode material can be increased while improving the diffusibility of the electrolytic solution and ions in the electrode material, whereby the electrode density can be improved. Further, characteristics such as electrostatic capacitance and rate characteristics of the power storage device can be further improved.

The first invention and the second invention may be used alone or in combination. Hereinafter, the first invention and the second invention of the present application may be collectively referred to as the present invention.

In the carbon material of the present invention, the O/C ratio measured by X-ray photoelectron spectroscopy (XPS) is preferably 0.08 or less, and more preferably 0.05 or less. In this case, the amount of functional groups on the surface of the carbon material can be further reduced, and the cycle characteristics of the power storage device can be further enhanced. The lower limit of the O/C ratio measured by X-ray photoelectron spectroscopy is not particularly limited, but may be, for example, 0.005.

The O/C ratio can be measured by, for example, X-ray photoelectron spectroscopy. Specifically, a multifunctional scanning X-ray photoelectron spectrometer (PHI 5000 VersaProbeII manufactured by ULVAC-PHI, Inc.) can be used. As measurement conditions, a photoelectron spectrum is measured under the conditions of an X-ray source: AlKα (1486.6 eV), a photoelectron extraction angle: 45 degrees, presence of charge neutralization, an X-ray beam diameter: 200 μm (50 W 15 kV), a pass energy: 58.7 eV, and narrow scan (C1s, O1s). Then, the peak area of the O1s spectrum appearing at binding energy of 525 eV to 540 eV is divided by the peak area of the C1s spectrum appearing at binding energy of 280 eV to 292 eV. Thereby, the ratio (O/C ratio) of the number of oxygen atoms to the number of carbon atoms contained in the carbon material can be calculated.

The carbon material of the present invention is a carbon material having a graphene layered structure. Therefore, conductivity can be enhanced, and battery characteristics such as rate characteristics of the power storage device can be further enhanced.

Whether the carbon material has a graphene layered structure can be confirmed by whether a peak near $2\theta = 26$ degrees (peak derived from the graphene layered structure) is observed when the X-ray diffraction spectrum of the carbon material is measured using a CuK$\alpha$ ray (wavelength: 1.541 Å). The X-ray diffraction spectrum can be measured by wide-angle X-ray diffractometry. As the X-ray diffractometer, for example, SmartLab (manufactured by Rigaku Corporation) can be used.

Examples of the carbon material having such a graphene layered structure include graphite and exfoliated graphite.

Graphite is a stack of a plurality of graphene sheets. The number of stacked graphene sheets of graphite is usually about 100,000 to 1,000,000. As the graphite, for example, natural graphite, artificial graphite, expanded graphite, or the like can be used. The expanded graphite has a higher proportion of a larger interlayer distance between graphene layers than that of normal graphite. Therefore, it is preferable to use expanded graphite as the graphite.

The exfoliated graphite is obtained by subjecting the original graphite to an exfoliation treatment, and refers to a graphene sheet stack which is thinner than the original graphite. The number of stacked graphene sheets in the exfoliated graphite may be smaller than that of the original graphite. The exfoliated graphite may be exfoliated graphite oxide.

In the exfoliated graphite, the number of stacked graphene sheets is not particularly limited, but is preferably 2 or more, and more preferably 5 or more, and is preferably 1,000 or less, and more preferably 500 or less. When the number of stacked graphene sheets is the above lower limit or more, scrolling of the exfoliated graphite and stacking of the exfoliated graphite in the liquid are suppressed, so that the conductivity of the exfoliated graphite can be further enhanced. When the number of stacked graphene sheets is the above upper limit or less, the specific surface area of the exfoliated graphite can be further increased.

The carbon material having a graphene layered structure is preferably partially exfoliated graphite having a structure in which graphite is partially exfoliated.

More specifically, the phrase "graphite is partially exfoliated" means that graphene layers are partially separated from the edge to the inside to some extent in the stack of graphene, that is, graphite is partially exfoliated at the edge (edge portion) thereof. The phrase also means that graphite layers are stacked in the same manner as the original graphite or primary exfoliated graphite in the central portion. Therefore, the portion where the graphite is partially exfoliated at the edge is continuous with the central portion. Further, the partially exfoliated graphite may include exfoliated graphite formed through exfoliation of graphite at an edge.

As described above, in the partially exfoliated graphite, graphite layers are stacked in the same manner as the original graphite or primary exfoliated graphite in the central portion. Therefore, the partially exfoliated graphite has a higher degree of graphitization than that of conventional graphene oxide and carbon black, and is excellent in conductivity. As a result, battery characteristics such as rate characteristics of the power storage device can be further enhanced.

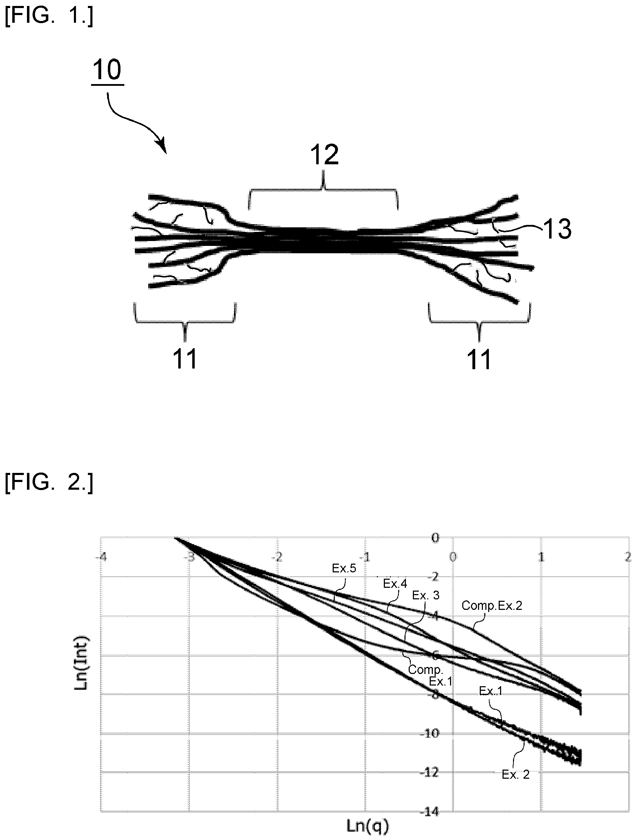

Fig. 1 is a schematic view showing an example of partially exfoliated graphite. As shown in Fig. 1, a partially exfoliated graphite 10 has a structure in which an edge portion 11 is exfoliated. Meanwhile, a central portion 12 has a graphite structure similar to that of the original graphite or primary exfoliated graphite. In the edge portion 11, a resin or a resin carbide 13 is disposed between the exfoliated graphene layers. The resin or the resin carbide 13 may be completely removed.

Whether graphite is partially exfoliated can be confirmed, for example, by observation with a scanning electron microscope (SEM) or an X-ray diffraction spectrum, similarly to the exfoliated graphite-resin composite material described in WO 2014/034156 A.

The carbon material of the present invention may contain at least one of a resin and a resin carbide. The resin carbide is preferably amorphous carbon. When the amorphous carbon is measured by X-ray diffractometry, it is preferable that no peak is detected at diffraction angles $2\theta$ of about 26 degrees. A part or all of the resin may remain without being carbonized. The resin is used for the purpose of forming a carbide, and thus is distinguished from a binder used for an electrode material of a power storage device.

Examples of the resin or the resin used for the resin carbide include polypropylene glycol, polyethylene glycol, a styrene polymer (polystyrene), a vinyl acetate polymer (polyvinyl acetate), polyglycidyl methacrylate, polyvinyl butyral, polyacrylic acid, polyester, polyester polyol, styrene-butadiene rubber, polyimide resin, and a fluorine-based polymer such as polytetrafluoroethylene and polyvinylidene fluoride. The resin or the resin carbide may be used alone or in combination of two or more thereof. Preferred examples of the resin or the resin used for the resin carbide include polyester polyols.

In the present invention, the content of the resin and/or resin carbide contained in 100 wt% of the carbon material is preferably 1 wt% or more, more preferably 3 wt% or more, still more preferably 10 wt% or more, and particularly preferably 15 wt% or more, and is preferably 99 wt% or less, and more preferably 95 wt% or less. When the content of the resin and/or the resin carbide is within the above range, the capacity such as electrostatic capacitance in the power storage device can be further increased.

The content of the resin and/or the resin carbide can be calculated, for example, by measuring a weight change accompanying a heating temperature by thermogravimetric analysis (hereinafter, referred to as TG).

The carbon material of the present invention may further contain another carbon material. The other carbon material is not particularly limited, and graphene, carbon nanotube, carbon nanofiber, carbon black, activated carbon, or the like can be used.

(Method for producing carbon material)

The carbon material of the present invention can be obtained, for example, by subjecting a composite of a carbon material having a graphene layered structure and a resin and/or a resin carbide to an activation treatment.

More specifically, in the method for producing a carbon material of the present invention, first, graphite or primary exfoliated graphite and a resin are mixed (mixing step). Before or after the mixing, an activator is further mixed to obtain a mixture. Next, the mixture is subjected to an activation treatment, whereby a carbon material can be obtained. In the mixing step, a surfactant such as carboxymethyl cellulose (CMC) may be further mixed with graphite or primary exfoliated graphite and a resin.

In addition, the mixing step may include a heating step in which graphite or primary exfoliated graphite and a resin are mixed and then heated. When the carbon material having a graphene layered structure is the partially exfoliated graphite, the heating in the heating step may be heating during thermal decomposition in the production of the partially exfoliated graphite. When the carbon material having a graphene layered structure is partially exfoliated graphite, the resin mixed in the mixing step may be a resin used in the production of the partially exfoliated graphite. That is, the mixing step may be a step of producing partially exfoliated graphite. The partially exfoliated graphite can be obtained by thermally decomposing at least a part of the resin in heating in the heating step or the activation step (activation treatment) to partially exfoliate graphite or primary exfoliated graphite from the edge portion.

As the graphite, expanded graphite is preferably used because graphite can be more easily exfoliated in a heating step or an activation step (activation treatment) described later. The primary exfoliated graphite widely includes exfoliated graphite obtained by exfoliating graphite by various methods. The primary exfoliated graphite may be partially exfoliated graphite. Since the primary exfoliated graphite is obtained by exfoliating graphite, the specific surface area thereof may be larger than that of graphite.

The heating temperature in the heating step can be, for example, 150°C to 600°C. The heating may be performed in the air or under an inert gas atmosphere such as a nitrogen gas atmosphere. The activator may be mixed with the graphite or the primary exfoliated graphite and the resin before the heating step and heated, or may be mixed after the heating step, that is, after the graphite or the primary exfoliated graphite and the resin have been heated. In the heating step or the activation step (activation treatment), a part of the resin may be carbonized, or the resin may be completely carbonized. In addition, heating may be performed only in the activation step without performing heating in the mixing step.

The activation treatment method is not particularly limited, and examples thereof include a chemical activation method and a gas activation method. Among them, an alkali activation method or a gas activation method is preferable from the viewpoint of more effectively increasing the specific surface area of the resulting carbon material.

The activator used in the alkali activation method is not particularly limited, and examples thereof include sodium hydroxide, potassium hydroxide, and potassium carbonate. Among them, when the carbon material is combined with a resin, potassium carbonate is preferable from the viewpoint of more effectively increasing the specific surface area of the carbon material only at a high temperature during the activation treatment without affecting the resin to be combined at normal temperature.

In the alkali activation method, such an activator and the carbon material having a graphene layered structure are mixed, and the activation treatment is performed. At this time, the activator and the carbon material having the graphene layered structure may be subjected to an activation treatment in a state of being physically mixed, or may be subjected to an activation treatment in a state in which the carbon material having the graphene layered structure is impregnated with the activator. From the viewpoint of more effectively increasing the specific surface area of the resulting carbon material, an activation treatment is preferably performed in a state in which the carbon material having the graphene layered structure is impregnated with the activator.

The temperature of the activation treatment in the alkali activation method can be, for example, 600°C to 1,000°C. The retention time at the temperature can be, for example, 30 minutes to 300 minutes. The activation treatment is desirably performed under an inert gas atmosphere such as a nitrogen gas or argon gas atmosphere.

The activator used in the gas activation method is not particularly limited, and examples thereof include carbon dioxide, water vapor, and combustion gas. Among them, the activator is preferably carbon dioxide from the viewpoint of precisely controlling the reactivity with the resin and more precisely designing the pore structure of the carbon material.

In the gas activation method, the activation treatment is performed by bringing such an activator into contact with the carbon material having the graphene layered structure. At this time, it is preferable to reduce the particle size of the carbon material from the viewpoint of increasing the contact probability between the activator and the carbon material having the graphene layered structure and more effectively increasing the specific surface area of the resulting carbon material. Regarding this particle size, for example, the $D_{50}$ of the carbon material calculated by a particle size distribution analyzer (MT3300 ExII, manufactured by MicrotracBEL Corp.) according to a laser diffraction method is preferably 10 $\mu$m or less, and more preferably 8 $\mu$m or less. The $D_{50}$ of the carbon material is preferably 1 $\mu$m or more, and more preferably 3 $\mu$m or more.

The temperature of the activation treatment in the gas activation method can be, for example, 600°C to 1,500°C. The retention time at the temperature can be, for example, 30 minutes to 300 minutes.

In the production step, the resin mixed with the graphite or the primary exfoliated graphite is not particularly limited. Examples thereof include polypropylene glycol, polyethylene glycol, a styrene polymer (polystyrene), a vinyl acetate polymer (polyvinyl acetate), polyglycidyl methacrylate, polyvinyl butyral, polyvinyl alcohol, polyacrylic acid, polyester, polyester polyol, starch, styrene-butadiene rubber, polyimide resin, and a fluorine-based polymer such as polytetrafluoroethylene and polyvinylidene fluoride. The resins may be used alone or in combination of two or more thereof. Preferred examples include polyester polyols.

In the production step, it is preferable to crosslink the resin with a crosslinking agent. By crosslinking, the specific surface area of the carbon material having the graphene layered structure can be more effectively increased.

The crosslinking agent is not particularly limited, and examples thereof include carboxylic acid derivatives such as terephthalic acid, adipic acid, pyridine dicarboxylic acid, and citric acid, boric acid derivatives such as boric acid, amine derivatives such as hexamethylenediamine, thiol derivatives such as 1,2-ethanedithiol, alcohol derivatives such as ethylene glycol, and other derivatives such as formaldehyde. Among them, citric acid is preferable from the viewpoint of more efficiently forming a crosslinked structure with a resin.

In the production step, the blending amount of the resin mixed with the graphite or the primary exfoliated graphite is preferably 1 part by weight or more, and more preferably 20 parts by weight or more, and is preferably 500 parts by weight or less, and more preferably 250 parts by weight or less, with respect to 1 part by weight of the graphite or the primary exfoliated graphite. When the blending amount of the resin mixed with the graphite or the primary exfoliated graphite is within the above range, the content of the resin and/or the resin carbide contained in the resulting carbon material is more easily controlled.

In the production step, the resin mixed with the graphite or the primary exfoliated graphite may be completely carbonized in the carbonization/activation step, or a part thereof may remain as a resin.

In the first invention, the slope of the straight line in the small-angle X-ray scattering spectrum of the carbon material can be controlled by, particularly, the type of the resin mixed with graphite or primary exfoliated graphite, the amount of the activator, or the temperature of the activation treatment. From this viewpoint, the resin mixed with the graphite or the primary exfoliated graphite is preferably a polyester polyol or the like. The amount of the activator is preferably 0.1 parts by mass or more and 3 parts by mass or less with respect to 1 part by mass of the intermediate composition of graphite or primary exfoliated graphite. The temperature of the activation treatment is preferably 750°C or more, and is preferably 1,200°C or less.

In the second invention, the pore structure such as the pore volume and the specific surface area of the carbon material can be particularly controlled by the type of the resin mixed with the graphite or the primary exfoliated graphite, the amount of the activator, or the temperature of the activation treatment. From this viewpoint, the resin mixed with the graphite or the primary exfoliated graphite is preferably a polyester polyol or the like. The amount of the activator is preferably 0.1 parts by mass or more and 3 parts by mass or less with respect to 1 part by mass of the intermediate composition of graphite or primary exfoliated graphite. The temperature of the activation treatment is preferably 750°C or more, and is preferably 1,200°C or less.

When the carbon material of the present invention is used for an electrode material of a power storage device, characteristics such as electrostatic capacitance and rate characteristics of the power storage device can be enhanced. Therefore, the carbon material of the present invention can be used as an electrode material for a power storage device.

In the present application, the first invention and the second invention can be used alone, but may be used in combination.

[Electrode material for power storage device]

In the present invention, the power storage device is not particularly limited. Examples thereof include a non-aqueous electrolyte primary battery, an aqueous electrolyte primary battery, a non-aqueous electrolyte secondary battery, an aqueous electrolyte secondary battery, a capacitor, an electric double layer capacitor, and a lithium ion capacitor. The electrode material for a power storage device of the present invention is an electrode material used for an electrode of a power storage device as described above. The electrode material for a power storage device of the present invention contains the carbon material of the present invention. Therefore, when the carbon material of the present invention is used as an electrode material of a power storage device, characteristics such as electrostatic capacitance and rate characteristics of the power storage device can be enhanced.

In particular, the carbon material contained in the electrode material for a power storage device can further improve the diffusibility of the electrolytic solution and ions in the electrode material as described above, and can further improve the characteristics such as electrostatic capacitance and rate characteristics. As a result, the capacity of the capacitor and the lithium ion secondary battery can be effectively enhanced. Examples of the capacitor include an electric double layer capacitor.

The electrode material for a power storage device can be used as an electrode of a power storage device by shaping the carbon material of the present invention containing a binder resin and a solvent as necessary.

The electrode material for a power storage device can be shaped by, for example, forming a sheet with a rolling roller and then drying the sheet. Alternatively, a coating liquid containing the carbon material of the present invention, a binder resin, and a solvent may be applied to a current collector and then dried.

Examples of the binder resin include polybutyral, polytetrafluoroethylene, styrene-butadiene rubber, polyimide resin, acrylic resin, and a fluorine-based polymer such as polyvinylidene fluoride, and water-soluble carboxymethyl cellulose. These binder resins may be used singly or as a plurality of binders. Preferably, styrene-butadiene rubber and water-soluble carboxymethyl cellulose can be used. When the styrene-butadiene rubber and the water-soluble carboxymethyl cellulose are used, the dispersibility can be further enhanced.

The blending ratio of the binder resin is preferably in a range of 0.3 parts by weight to 40 parts by weight, and more preferably in a range of 0.3 parts by weight to 15 parts by weight, with respect to 100 parts by weight of the carbon material. When the blending ratio of the binder resin is within the above range, the electrostatic capacitance of the power storage device can be further increased.

As the solvent, ethanol, N-methylpyrrolidone (NMP), water, or the like can be used.

When the power storage device is used for a capacitor, an aqueous electrolytic solution or a non-aqueous (organic) electrolytic solution may be used as the electrolytic solution of the capacitor.

Examples of the aqueous electrolytic solution include an electrolytic solution prepared by using water as a solvent and using sulfuric acid, potassium hydroxide, or the like as an electrolyte.

On the other hand, as the non-aqueous electrolytic solution, for example, an electrolytic solution prepared by using the following solvent, electrolyte, or ionic liquid can be used. Specific examples of the solvent include acetonitrile, propylene carbonate (PC), ethylene carbonate (EC), dimethyl carbonate (DMC), diethyl carbonate (DEC), and acrylonitrile (AN).

Examples of the electrolyte include lithium hexafluorophosphate ($LiPF_6$), lithium tetrafluoroborate ($LiBF_4$), tetraethylammonium tetrafluoroborate ($TEABF_4$), and triethylmethylammonium tetrafluoroborate ($TEMABF_4$).

Further, as the ionic liquid, for example, an ionic liquid having the following cations and anions can be used. Examples of the cation include an imidazolium ion, a pyridinium ion, a piperidinium ion, a pyrrolidinium ion, an ammonium ion, and a phosphonium ion. Examples of the anion include boron tetrafluoride ion ($BF_4^-$), boron hexafluoride ion ($BF_6^-$), aluminum tetrachloride ion ($AlCl_4^-$), tantalum hexafluoride ion ($TaF_6^-$), tris(trifluoromethanesulfonyl)methane ion ($C(CF_3SO_2)_3^-$), and bisfluorosulfonylimide. When the ionic liquid is used, the driving voltage can be further improved in the power storage device. That is, the energy density can be further increased.

Next, the present invention will be clarified by giving specific Examples and Comparative Examples of the present invention. Note that the present invention is not limited to the following Examples.

(Example 1)

Expanded graphite (1 g) (manufactured by Toyo Tanso Co., Ltd., trade name "PF powder 8", BET specific surface area: 22 $m^2$/g) and 250 g of polyester polyol ("RFK868" manufactured by Kawasaki Kasei Chemicals Ltd.) were mixed using a homomixer (manufactured by PRIMIX Corporation). By this operation, polyester polyol was adsorbed to expanded graphite. In this way, a composition in which polyester polyol was adsorbed to expanded graphite was prepared.

After the mixing, 10 g of potassium carbonate as an activator was well mixed with 5.0 g of the composition with a spatula in a beaker. Thereby, the weight ratio of potassium carbonate to the composition was made 1 time (= impregnation ratio 1).

A heating step of maintaining this composition at a temperature of 370°C for 1 hour under a nitrogen atmosphere was performed. Thereby, the polyester polyol was thermally decomposed to obtain partially exfoliated graphite. A part of the polyester polyol (resin) remains in the partially exfoliated graphite.

Subsequently, the partially exfoliated graphite was subjected to an activation treatment by holding the partially exfoliated graphite at a temperature (carbonization/activation temperature) of 800°C for 60 minutes under a nitrogen atmosphere. Finally, the resulting product was washed with hot water so as to be neutral, thus preparing a carbon material.

(Example 2)

A carbon material was obtained in the same manner as in Example 1 except that the weight ratio of potassium carbonate to the composition in which polyester polyol was adsorbed to expanded graphite was set to 2 times.

(Example 3)

Expanded graphite (1 g) (manufactured by Toyo Tanso Co., Ltd., trade name "PF powder 8", BET specific surface area: 22 m$^2$/g), 125 g of polyester polyol ("RLK087" manufactured by Kawasaki Kasei Chemicals Ltd.), and 125 g of starch (manufactured by Wako Pure Chemical Industries, Ltd.) were mixed using LABOLUTION (manufactured by PRIMIX Corporation, stirring blade: LEVIASTAR). By this operation, polyester polyol and starch were adsorbed to expanded graphite. In this way, a composition in which polyester polyol and starch were adsorbed to expanded graphite was prepared.

A heating step of maintaining this composition at a temperature of 370°C for 1 hour under a nitrogen atmosphere was performed. Thereby, the polyester polyol and the starch were thermally decomposed to obtain partially exfoliated graphite. A part of the polyester polyol and the starch (resin) remains in the partially exfoliated graphite.

Subsequently, the partially exfoliated graphite was subjected to an activation treatment by holding the partially exfoliated graphite at a temperature (carbonization/activation temperature) of 950°C for 60 minutes under a carbon dioxide atmosphere, thereby obtaining a carbon material.

(Example 4)

Expanded graphite (1 g) (manufactured by Toyo Tanso Co., Ltd., trade name "PF powder 8", BET specific surface area: 22 m$^2$/g), 188 g of polyester polyol ("RLK087" manufactured by Kawasaki Kasei Chemicals Ltd.), and 62 g of citric acid (manufactured by Wako Pure Chemical Industries, Ltd.) were mixed using LABOLUTION (manufactured by PRIMIX Corporation, stirring blade: LEVIASTAR). By this operation, polyester polyol and citric acid were adsorbed to expanded graphite. A heating step of maintaining this composition at a temperature of 200°C for 3 hours was further performed, thereby crosslinking polyester polyol and citric acid. In this way, a composition in which polyester polyol and citric acid were adsorbed to expanded graphite was prepared.

A heating step of maintaining this composition at a temperature of 370°C for 1 hour under a nitrogen atmosphere was performed. Thereby, the polyester polyol was thermally decomposed to obtain partially exfoliated graphite. A part of the polyester polyol and the crosslinked structure remains in this partially exfoliated graphite.

Subsequently, the partially exfoliated graphite was subjected to an activation treatment by holding the partially exfoliated graphite at a temperature (carbonization/activation temperature) of 950°C for 60 minutes under a carbon dioxide atmosphere, thereby obtaining a carbon material.

(Example 5)

Expanded graphite (1 g) (manufactured by Toyo Tanso Co., Ltd., trade name "PF powder 8", BET specific surface area: 22 m$^2$/g), 94 g of polyester polyol ("RLK087" manufactured by Kawasaki Kasei Chemicals Ltd.), 125 g of starch (manufactured by Wako Pure Chemical Industries, Ltd.), and 31 g of citric acid (manufactured by Wako Pure Chemical Industries, Ltd.) were mixed using LABOLUTION (manufactured by PRIMIX Corporation, stirring blade: LEVIASTAR). By this operation, polyester polyol and starch were adsorbed to expanded graphite. A carbon material was obtained in the same manner as in Example 4 except that a composition in which polyester polyol and starch were adsorbed to expanded graphite was prepared in this manner.

(Comparative Example 1)

As the carbon material, activated carbon (trade name "YP50F" manufactured by Kuraray Chemical Co., Ltd.) having no graphene layered structure was used as it was.

(Comparative Example 2)

As the carbon material, porous carbon (manufactured by Toyo Tanso Co., Ltd., trade name "MH") having no graphene layered structure was used as it was.

[Evaluation]

The carbon materials obtained in Examples 1 to 5 and Comparative Examples 1 to 2 were evaluated as follows. The results are shown in Table 1 below.

BET specific surface area;
The BET specific surface area of each of the carbon materials obtained in Examples 1 to 5 and Comparative Examples 1 to 2 was calculated as follows. The adsorption isotherm was measured using a high-precision gas adsorption amount measuring apparatus (product number "BELSORP-MAX", manufactured by MicrotracBEL Corp., nitrogen gas (77 K), $1.0 \times 10^{-6}$ < relative pressure $P/P_0$ < 0.99). This adsorption isotherm was analyzed with analysis software (software name "BELMaster" manufactured by MicrotracBEL Corp.) to calculate the BET specific surface area based on the BET method.

Evaluation of pore volume;
The pore volume of each of the carbon materials obtained in Examples 1 to 5 and Comparative Examples 1 to 2 was calculated using an adsorption isotherm obtained in the same manner as described above with analysis software (software name "BELMaster" manufactured by MicrotracBEL Corp.) in accordance with an MP method.

Small-angle X-ray scattering measurement;
The small-angle X-ray scattering measurement (SAXS) of each of the carbon materials obtained in Examples 1 to 5 and Comparative Examples 1 to 2 was performed according to the following procedure using an X-ray diffractometer. First, a powder sample was sandwiched between a 1 mm spacer and two polyethyl ether ketone (PEEK) films to prepare a test specimen. The test specimen was attached to a measurement jig, and X-rays were made incident on the test specimen. The irradiation direction of the X-ray was adjusted so as to be orthogonal to the plane direction of the test piece constituting the test specimen. As the X-ray diffractometer, trade name "X-ray diffractometer Smart Lab" manufactured by Rigaku Corporation was used.

In addition, a CuK$\alpha$ ray (wavelength: 0.154 nm) was used as a light source at an output of 45 kV and 200 mA, and a small-angle scattering arrangement was used. The measurement was performed at a step angle of 0.02° in a scan range of 0.06 to 6° with a scan rate of 0.2°/min.

Fig. 2 is a view showing small-angle X-ray scattering spectra of carbon materials obtained in Examples 1 to 5 and Comparative Examples 1 to 2. The slope of a straight line (SAXS slope) connecting a point indicating the natural logarithm of the scattering intensity when the natural logarithm LN (q) of the scattering vector is -1.5 and a point indicating the natural logarithm of the scattering intensity when the natural logarithm LN (q) of the scattering vector is 1.4, shown in Fig. 2 was determined.

Evaluation of pore size;
The pore size of each of the carbon materials obtained in Examples 1 to 5 and Comparative Examples 1 to 2 was evaluated by measuring an adsorption isotherm with $N_2$ (77 K) using a high-precision gas adsorption amount measuring apparatus (product name "BELSORP-MAX" manufactured by MicrotracBEL Corp.). The pore size was calculated by analyzing this adsorption isotherm with analysis software (software name "BELMaster" manufactured by MicrotracBEL Corp.) in accordance with NLDFT (distribution function: Gauss, definition of pore size: Solid Def. Pore Size, Kernel:Adsorption-Slit).

Evaluation of electrostatic capacitance;
A coated electrode was prepared using each of the carbon materials obtained in Examples 1 to 5 and Comparative Examples 1 to 2. Specifically, the obtained carbon material was dispersed in water with a planetary centrifugal mixer (product number "AR-100" manufactured by Thinky Corporation). Further, 5 parts by weight of carboxymethyl cellulose as a binder resin and 5 parts by weight of styrene-butadiene rubber were added to and mixed with 90 parts by weight of the carbon material to obtain a coating liquid. The obtained coating liquid was applied onto an aluminum foil and dried to prepare an electrode sheet.

In Comparative Example 2, the electrode sheet could not be coated well. This is considered to be because water as a solvent was absorbed in the carbon material due to the large pore size of the carbon material, resulting in failure of formation of a good dispersion state.

Next, in a flat cell (manufactured by Hohsen Corp.), two electrodes punched out with a diameter of 10 mm from the prepared electrode sheet were sandwiched as a negative electrode and a positive electrode with a separator interposed therebetween to assemble a cell. Then, 0.5 ml of a propylene carbonate solution of 1M tetraethylammonium tetrafluoroborate was injected as an electrolytic solution to prepare an electric double layer capacitor. These operations were performed in an environment of a dew point of -70°C or less.

When the electrostatic capacitance of the electric double layer capacitor was measured, the control current value was set to 10 mA/g (a current of 10 mA was applied per 1 g of the electrode weight) and 500 mA/g, and charge/discharge characteristic measurement between 0 V and 2.5 V was repeatedly performed for three cycles. The electrostatic capacitance was calculated based on the measurement results thus obtained with a calculation range of 1.25 V to 2.5 V using Equation (1) below.

$$C = I/(\Delta V/\Delta t)... \quad \text{Equation (1)}$$

(In Equation (1), C is the electrostatic capacitance and the unit thereof is F. I is the discharge current value and the unit thereof is A. $\Delta V$ is the difference between the start voltage value and the end voltage value in the calculation range and the unit thereof is V. $\Delta V$ is 1.25 here because the range is from 2.5 V to 1.25 V. $\Delta t$ is the time required for discharging from the start voltage value to the end voltage value and the unit thereof is second.)

In addition, the electrostatic capacitance per weight was a value obtained by dividing the electrostatic capacitance calculated by Equation (1) above by the total weight of the negative electrode and the positive electrode. The electrostatic capacitance was determined according to the following criteria.

[Determination criteria for electrostatic capacitance]

Good: Electrostatic capacitance (F/g) is 20 or more
Poor: Electrostatic capacitance (F/g) is less than 20

Evaluation of rate characteristics;

In addition, the rate characteristics were evaluated from the electrostatic capacitance per weight obtained as described above. In the evaluation of the rate characteristics, the value of $C_A/C_B$ was calculated with the electrostatic capacitance when the control current value was set to 10 mA/g as $C_A$ and the electrostatic capacitance when the control current value was set to 500 mA/g as $C_B$. The rate characteristics were determined according to the following criteria.

[Determination criteria for rate characteristics]

Good: Rate characteristics ($C_A/C_B$) are 0.5 or more
Poor: Rate characteristics ($C_A/C_B$) are less than 0.5

[Table 1]

| | Material | Graphene layered structure - | BET specific surface area | Pore volume | SAXS slope | Pore size (NLDFT) | Electrostatic capacitance | Rate characteristics |
|---|---|---|---|---|---|---|---|---|
| | | | m²/g | cm³/g | - | nm | F/g | - |
| Example 1 | Partially exfoliated graphite | Yes | 1242 | 0.50 | -2.24 | 0.8 | 22.6 Good | 0.65 Good |
| Example 2 | Partially exfoliated graphite | Yes | 1371 | 0.57 | -2.40 | 1 | 26.1 Good | 0.71 Good |
| Example 3 | Partially exfoliated graphite | Yes | 1593 | 0.60 | -1.85 | 1.6 | 26.4 Good | 0.88 Good |
| Example 4 | Partially exfoliated graphite | Yes | 950 | 0.90 | -2.00 | 1.3 | 21.3 Good | 0.75 Good |
| Example 5 | Partially exfoliated graphite | Yes | 980 | 0.70 | -1.84 | 1.2 | 22.1 Good | 0.85 Good |
| Comparative Example 1 | AC | No | 1704 | 0.73 | -1.19 | 1.2 | 17.2 Poor | 0.18 Poor |
| Comparative Example 2 | MH | No | 1591 | 0.95 | -1.73 | 3.8 | - | - |

(Example 6)

Expanded graphite (1 g) (manufactured by Toyo Tanso Co., Ltd., trade name "PF powder 8", BET specific surface area: 22 $m^2$/g) and 250 g of polyester polyol ("RFK868" manufactured by Kawasaki Kasei Chemicals Ltd.) were mixed using a homomixer (manufactured by PRIMIX Corporation). By this operation, polyester polyol was adsorbed to expanded graphite. In this way, a composition in which polyester polyol was adsorbed to expanded graphite was prepared.
After the mixing, 10 g of potassium carbonate as an activator was well mixed with 5.0 g of the composition with a spatula in a beaker. Thereby, the weight ratio of potassium carbonate to the composition was made 1 time (= impregnation ratio 1).
A heating step of maintaining this composition at a temperature of 370°C for 1 hour under a nitrogen atmosphere was performed. Thereby, the polyester polyol was thermally decomposed to obtain partially exfoliated graphite. A part of the polyester polyol (resin) remains in the partially exfoliated graphite.
Subsequently, the partially exfoliated graphite was subjected to an activation treatment by holding the partially exfoliated graphite at a temperature (carbonization/activation temperature) of 800°C for 60 minutes under a nitrogen atmosphere. Finally, the resulting product was washed with hot water so as to be neutral, thus preparing a carbon material.

(Example 7)

A carbon material was obtained in the same manner as in Example 6 except that the weight ratio of potassium carbonate to the composition in which polyester polyol was adsorbed to expanded graphite was set to 2 times.

(Comparative Example 3)

As the carbon material, activated carbon (trade name "YP50F" manufactured by Kuraray Chemical Co., Ltd.) having no graphene layered structure was used as it was.

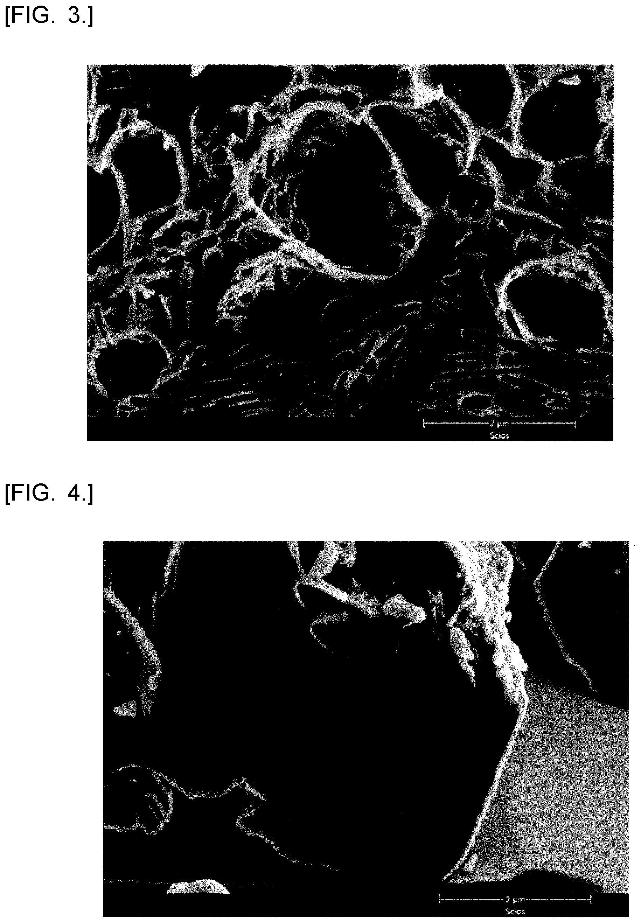

Fig. 3 is a scanning electron microscope (SEM) photograph of the cross section of powder of the carbon material obtained in Example 6. Fig. 4 is a scanning electron microscope (SEM) photograph of the cross section of powder of the carbon material obtained in Comparative Example 3. As the scanning electron microscope, product number "Scios" manufactured by FEI Company was used. In Example 6 and Comparative Example 3, observation was performed at a processing voltage of 30 kV, an acceleration voltage of 3 kV, and a magnification of 10,000 times.
As shown in Figs. 3 and 4, it can be seen that in the carbon material obtained in Example 6, many pores having a pore size of 0.003 $\mu$m to 2 $\mu$m are formed as compared with the carbon material of Comparative Example 3.

[Evaluation]

The carbon materials obtained in Examples 6 to 7 and Comparative Example 3 were evaluated as follows. The results are shown in Table 2 below.

BET specific surface area;

The BET specific surface area of each of the carbon materials obtained in Examples 6 to 7 and Comparative Example 3 was calculated as follows. The adsorption isotherm was measured using a high-precision gas adsorption amount measuring apparatus (product number "BELSORP-MAX", manufactured by MicrotracBEL Corp., nitrogen gas (77 K), 1.0 $\times$ 10$^{-6}$ < relative pressure P/$P_0$ < 0.99). This adsorption isotherm was analyzed with analysis software (software name "BELMaster" manufactured by MicrotracBEL Corp.) to calculate the BET specific surface area based on the BET method.

Evaluation of pore structure;

The pore volume (pore capacity), the median size of pores, and the porosity in the carbon material were measured using a pore distribution measuring apparatus ("AutoPore V 9620" manufactured by Micromeritics Instrument Corporation). The measurement was performed in a range of a pore size of the carbon material of 0.003 $\mu$m to 2 $\mu$m.

Evaluation of pore size by NLDFT;

The pore size of each of the carbon materials obtained in Examples 6 to 7 and Comparative Example 3 was evaluated by measuring an adsorption isotherm with $N_2$ (77 K) using a highprecision gas adsorption amount measuring apparatus (product name "BELSORP-MAX" manufactured by MicrotracBEL Corp.). The pore size was calculated by analyzing this adsorption isotherm with analysis software (software name "BELMaster" manufactured by MicrotracBEL Corp.) in accordance with NLDFT (distribution function: Gauss, definition of pore size: Solid Def. Pore Size, Kernel:Adsorption-Slit).

Evaluation of electrostatic capacitance;

A coated electrode was prepared using each of the carbon materials obtained in Examples 6 to 7 and Comparative Example 3. Specifically, the obtained carbon material was dispersed in water with a planetary centrifugal mixer (product number "AR-100" manufactured by Thinky Corporation). Further, 5 parts by weight of carboxymethyl cellulose as a binder resin and 5 parts by weight of styrene-butadiene rubber were added to and mixed with 90 parts by weight of the carbon material to obtain a coating liquid. The obtained coating liquid was applied onto an aluminum foil and dried to prepare an electrode sheet.

Next, in a flat cell (manufactured by Hohsen Corp.), two electrodes punched out with a diameter of 10 mm from the prepared electrode sheet were sandwiched as a negative electrode and a positive electrode with a separator interposed therebetween to assemble a cell. Then, 0.5 ml of a propylene carbonate solution of 1M tetraethylammonium tetrafluoroborate was injected as an electrolytic solution to prepare an electric double layer capacitor. These operations were performed in an environment of a dew point of -70°C or less.

When the electrostatic capacitance of the electric double layer capacitor was measured, the control current value was set to 10 mA/g (a current of 10 mA was applied per 1 g of the electrode weight) and 500 mA/g, and charge/discharge characteristic measurement between 0 V and 2.5 V was repeatedly performed for three cycles. The electrostatic capacitance was calculated based on the measurement results thus obtained with a calculation range of 1.25 V to 2.5 V using Equation (2) below.

$$C = I/(\Delta V/\Delta t)... \quad \text{Equation (2)}$$

(In Equation (2), C is the electrostatic capacitance and the unit thereof is F. I is the discharge current value and the unit thereof is A. $\Delta V$ is the difference between the start voltage value and the end voltage value in the calculation range and the unit thereof is V. $\Delta V$ is 1.25 here because the range is from 2.5 V to 1.25 V. $\Delta t$ is the time required for discharging from the start voltage value to the end voltage value and the unit thereof is second.)

In addition, the electrostatic capacitance per weight was a value obtained by dividing the electrostatic capacitance calculated by Equation (2) above by the total weight of the negative electrode and the positive electrode. The electrostatic capacitance was determined according to the following criteria.

[Determination criteria for electrostatic capacitance]

Good: Electrostatic capacitance (F/g) is 20 or more
Poor: Electrostatic capacitance (F/g) is less than 20

Evaluation of rate characteristics;
In addition, the rate characteristics were evaluated from the electrostatic capacitance per weight obtained as described above. In the evaluation of the rate characteristics, the value of $C_A/C_B$ was calculated with the electrostatic capacitance when the control current value was set to 10 mA/g as $C_A$ and the electrostatic capacitance when the control current value was set to 500 mA/g as $C_B$. The rate characteristics were determined according to the following criteria.

[Determination criteria for rate characteristics]

Good: Rate characteristics ($C_A/C_B$) are 0.5 or more
Poor: Rate characteristics ($C_A/C_B$) are less than 0.5

The results are shown in Table 2 below.

[Table 2]

|  | Material | BET specific surface area | Pore volume | Median size | Porosity | Pore size (NLDFT) | Electrostatic capacitance | Rate characteristics |
|---|---|---|---|---|---|---|---|---|
|  |  | m²/g | mL/g | μm | % | nm | F/g |  |
| Example 6 | Partially exfoliated graphite | 1242 | 4.931 | 0.49 | 84 | 0.8 | 22.6 Good | 0.65 Good |
| Example 7 | Partially exfoliated graphite | 1371 | 5.913 | 0.33 | 83 | 1 | 26.1 Good | 0.71 Good |
| Comparative Example 3 | AC | 1704 | 1.152 | 0.82 | 53 | 1.2 | 17.2 Poor | 0.18 Poor |

**EXPLANATION OF SYMBOLS**

10: Partially exfoliated graphite
11: Edge portion
12: Central portion
13: Resin or resin carbide

**Claims**

1. A carbon material used for an electrode material of a power storage device,

   the carbon material having a graphene layered structure, and
   in a small-angle X-ray scattering spectrum of the carbon material, a slope of a straight line connecting a point indicating a natural logarithm of a scattering intensity when a natural logarithm LN (q) of a scattering vector is -1.5 and a point indicating a natural logarithm of a scattering intensity when the natural logarithm LN (q) of the scattering vector is 1.4 being -1.5 or less.

2. The carbon material according to claim 1, wherein a scattering peak is not substantially observed in a range of a natural logarithm LN (q) of the scattering vector of -1.5 to 1.4 in the small-angle X-ray scattering spectrum of the carbon material.

3. The carbon material according to claim 1 or 2, wherein in the small-angle X-ray scattering spectrum of the carbon material, the slope of the straight line connecting the point indicating the natural logarithm of the scattering intensity when the natural logarithm LN (q) of the scattering vector is -1.5 and the point indicating the natural logarithm of the scattering intensity when the natural logarithm LN (q) of the scattering vector is 1.4 is -1.8 or less.

4. The carbon material according to any one of claims 1 to 3, wherein in the small-angle X-ray scattering spectrum of the carbon material, the slope of the straight line connecting the point indicating the natural logarithm of the scattering intensity when the natural logarithm LN (q) of the scattering vector is -1.5 and the point indicating the natural logarithm of the scattering intensity when the natural logarithm LN (q) of the scattering vector is 1.4 is - 2.0 or more.

5. The carbon material according to any one of claims 1 to 4, wherein a pore size of the carbon material measured in accordance with non-localized density functional theory (NLDFT) is 0.6 nm or more and 2.0 nm or less.

6. The carbon material according to any one of claims 1 to 5, wherein a pore volume of the carbon material measured in accordance with a micropore method is 0.3 $cm^3$/g or more and 1.0 $cm^3$/g or less.

7. The carbon material according to any one of claims 1 to 6, wherein a BET specific surface area of the carbon material is 900 $m^2$/g or more and 3,500 $m^2$/g or less.

8. A carbon material used for an electrode material of a power storage device,

   the carbon material having a graphene layered structure,
   a BET specific surface area of the carbon material being 450 $m^2$/g or more, and
   a pore volume of the carbon material in a range of a pore size of 0.003 $\mu$m to 2 $\mu$m measured by mercury porosimetry being 1.5 mL/g or more.

9. The carbon material according to claim 8, wherein a median size of pores of the carbon material measured by mercury porosimetry is 0.7 $\mu$m or less.

10. The carbon material according to claim 8 or 9, wherein a porosity of the carbon material measured by mercury porosimetry is 60% or more.

11. The carbon material according to any one of claims 8 to 10, wherein a pore size of the carbon material measured by NLDFT is 0.6 nm or more and 1.5 nm or less.

**12.** The carbon material according to any one of claims 1 to 11, wherein an O/C ratio of the carbon material measured by X-ray photoelectron spectroscopy is 0.05 or less.

**13.** The carbon material according to any one of claims 1 to 12, wherein the carbon material is graphite or exfoliated graphite.

**14.** The carbon material according to any one of claims 1 to 13, wherein the carbon material is partially exfoliated graphite having a structure in which graphite is partially exfoliated.

**15.** An electrode material for a power storage device, comprising the carbon material according to any one of claims 1 to 14.

[FIG. 1.]

[FIG. 2.]

[FIG. 3.]

[FIG. 4.]

### A. CLASSIFICATION OF SUBJECT MATTER
Int.Cl. H01M4/587(2010.01)i, H01G11/24(2013.01)i, H01G11/36(2013.01)i, C01B32/21(2017.01)i, C01B32/348(2017.01)i
FI: H01G11/24, H01M4/587, H01G11/36, C01B32/348, C01B32/21
According to International Patent Classification (IPC) or to both national classification and IPC

### B. FIELDS SEARCHED
Minimum documentation searched (classification system followed by classification symbols)
Int.Cl. H01M4/587, H01G11/24, H01G11/36, C01B32/21, C01B32/348

Documentation searched other than minimum documentation to the extent that such documents are included in the fields searched
Published examined utility model applications of Japan   1922-1996
Published unexamined utility model applications of Japan   1971-2020
Registered utility model specifications of Japan   1996-2020
Published registered utility model applications of Japan   1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2018/230080 A1 (SEKISUI CHEMICAL CO., LTD.) 20 December 2018 (2018-12-20), paragraphs [0028], [0037], [0091], [0092], [0095], [0097], [0099], [0105]-[0117] | 1-15 |
| X | CN 105271176 A (NANTONG PILOT-TESTS INSTITUTE OF GREEN TECHNOLOGY CO., LTD.) 27 January 2016 (2016-01-27), paragraphs [0002], [0021], [0023], fig. 3 | 1-15 |
| A | JP 2014-96290 A (SUMITOMO CHEMICAL CO., LTD.) 22 May 2014 (2014-05-22) | 1-15 |

☐ Further documents are listed in the continuation of Box C.      ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 December 2020 | 08 December 2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

| International application No. |
|---|
| PCT/JP2020/035695 |

| | | |
|---|---|---|
| WO 2018/230080 A1 | 20 December 2018 | EP 3640203 A1<br>paragraphs [0028], [0037],<br>[0091], [0092], [0095], [0097],<br>[0099], [0104]-[0114]<br>CN 110520382 A<br>KR 10-2020-0018372 A |
| CN 105271176 A | 27 January 2016 | WO 2017/084251 A1 |
| JP 2014-96290 A | 22 May 2014 | (Family: none) |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016143423 A
- WO 2014034156 A